Europäisches Patentamt

European Patent Office

Office européen des brevets

(11) Veröffentlichungsnummer: **0 029 547**
**A1**

# (12) EUROPÄISCHE PATENTANMELDUNG

(21) Anmeldenummer: **80106956.8**

(22) Anmeldetag: **11.11.80**

(51) Int. Cl.³: **H 04 Q 3/54**

(30) Priorität: **26.11.79 DE 2947594**

(43) Veröffentlichungstag der Anmeldung:
**03.06.81 Patentblatt 81/22**

(84) Benannte Vertragsstaaten:
**AT CH DE LI**

(71) Anmelder: **SIEMENS AKTIENGESELLSCHAFT Berlin
und München
Postfach 22 02 61
D-8000 München 22(DE)**

(72) Erfinder: **Schwarz, Günter
Allinger Strasse 31
D-8031 Puchheim(DE)**

(54) **Verfahren zur individuellen Steuerung der Sätze einer Satzgruppe eines Fernmeldesystems, insbesondere eines Fernsprech-Vermittlungssystems.**

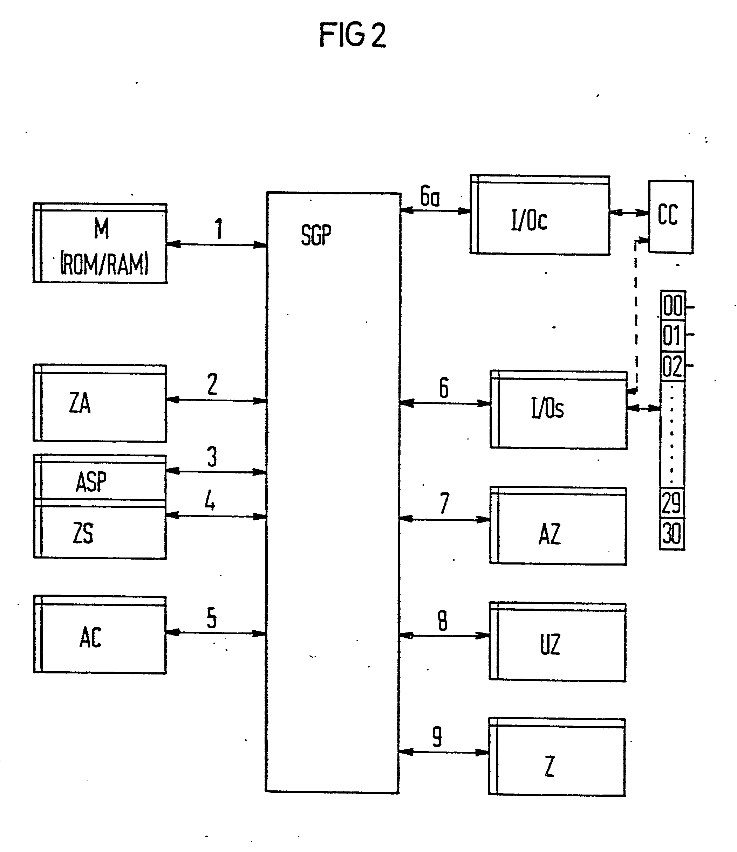

(57) Die Erfindung betrifft ein Verfahren zur individuellen Steuerung der Sätze (z.B.00) einer Satzgruppe (00...30) eines mehrere solche Satzgruppen aufweisenden Fernmeldesystems. Das Steuerorgan weist eine Prozessoreinheit (SGP) auf, ferner einen impulsförmig die Adressen der Sätze (00...30) sendenden, sowie Sendeimpulse, nämlich Informationen für diese Sätze sendenden Sender (I/Os). Das Steuerorgan hat Zugriff zu mehreren Speichern, (M, ZA, ASP, ZS...), die auch durch Abschnitte eines oder mehrerer Mehrzweckspeicher gebildet sein können. Zue Steuerung der Wählimpulslieferung der Sätze stellt ein Teil der Sendeimpulse Einzelwerte dar, die auf einzelne Punkte von Wählimpulsen von Wählimpulsfolgen bezogen sind und die vom Steuerorgan selbst festgelegt werden. Ein Auftragsspeicher (ASP) dient zur Speicherung der Aufträge, welche der verschiedenen Sätze eine Wählimpulsfolge zu liefern haben, wobei ein Zwischenspeicher (ZS) zur Speicherung der derzeit nach zu liefernden Anzahl der Wählimpulse dient. Der Sender (I/Os) sendet, gesteuert von einem zentral gesteuerten Takt, die von dem Steuerorgan festgelegten Einzelwerte an die Sätze (Fig. 2).

FIG 2

Croydon Printing Company Ltd.

SIEMENS AKTIENGESELLSCHAFT        Unser Zeichen
Berlin und München                VPA   79 P 6 2 1 8 E

Verfahren zur individuellen Steuerung der Sätze einer
Satzgruppe eines Fernmeldesystems, insbesondere eines
Fernsprech-Vermittlungssystems.

Die Erfindung geht aus von einem speziellen Verfahren
zur Steuerung der Sätze eines Fernmeldesystems mittels
eines von einer eigenen, also dezentralen, Prozessoreinheit gesteuerten Steuerorgans einer Satzgruppe von
einem mehrere Satzgruppen aufweisenden Fernmeldesystem,
insbesondere von einem durch einen zentralen Rechner digital gesteuerten Fernsprech-Vermittlungssystem. Bei den
vom Steuerorgan gesteuerten Sätzen kann es sich z.B. um
die Schnittstellen dieses Fernmeldesystems zu einem anderen, z.B. elektromechanischen, Fernmeldesystem handeln, das von außen her durch einzelne nacheinander gelieferte Wählimpulse gesteuert ist.

Die Erfindung geht nämlich aus von einem, wie auch im
Oberbegriff des Patentanspruches 1 angegeben ist, Verfahren zur individuellen Steuerung der, Verbindungs-

Be 1 Ky /22.11.1979

kenndaten empfangenden und liefernden, Sätze einer Satzgruppe eines mehrere Satzgruppen aufweisenden Fernmeldesystems, insbesondere eines Fernsprech-Vermittlungssystems, mittels eines Steuerorgans, das

- eine Prozessoreinheit aufweist, sowie einen Sender, der zur Steuerung der Sätze impulsförmig die Adressen der zugeordneten Sätze sowie Sendeimpulse, nämlich die impulsförmigen Informationen für diese Sätze, sendet, und

- Zugriff zu mehreren Speichern hat, die auch durch mehrere Abschnitte eines oder mehrerer Mehrzweckspeicher gebildet sein können.

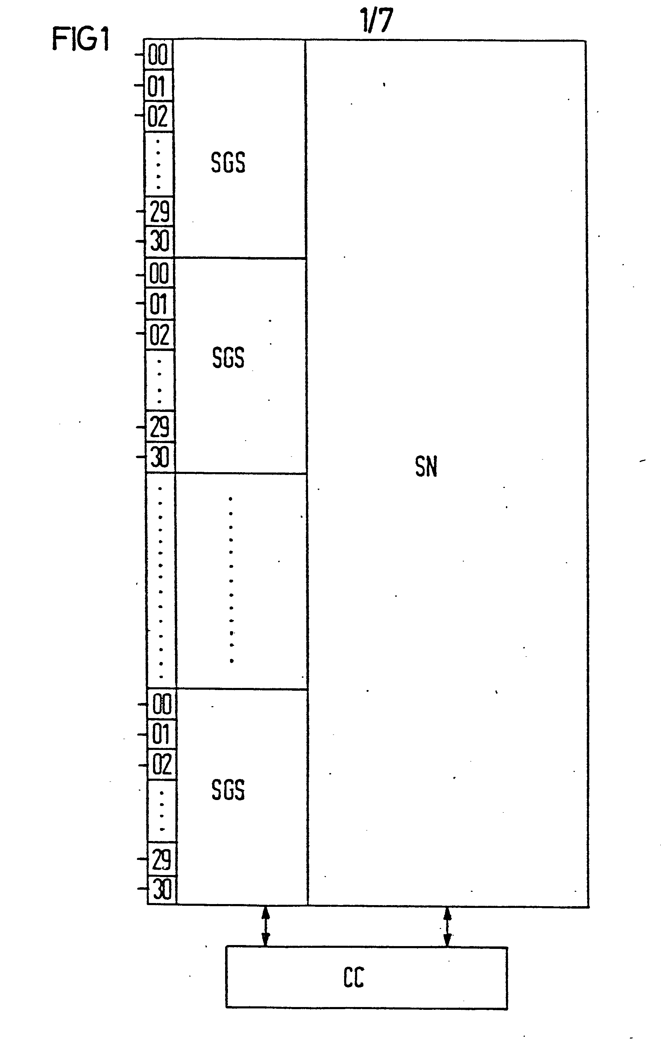

Ein solches Verfahren für ein Steuerorgan ist, wenn nicht identisch, dann sehr weitgehend für sich vorbekannt, vgl. z.B. DE-PS 26 47 404, Fig. 1 und Sp. 3, Z. 46 bis 54, Sp. 4, Z. 20 bis 34, Sp. 5, Z. 39 bis 68, Sp. 6, Z. 64 bis 67, sowie, damit verbunden, Siemens, telcom report 2 (1979), Beiheft "Telefonsystem EMS", S. 14 bis 18, insbesondere Bild 3 und S. 13, linke Sp., Z. 6 bis 14. Die Erfindung geht davon aus, daß bei diesem Fernmeldesystem "EMS" eine eigene Prozessoreinheit speziell für den Empfang und für die Lieferung der Wählimpulse mittels der Sätze bereits benutzt wird, wobei andere Prozessoreinheiten von anderen Satzgruppen-Steuerorganen sonstige Satzfunktionen, z.B. Sammeln sonstiger Verbindungskenndaten, übernehmen - wobei also für diese Art von Fernmeldesystem hier kein Schutz beansprucht wird. Bei der Erfindung wird eine solche eigene Prozessoreinheit bzw. ein eigenes Satzgruppen-Steuerorgan für den Empfang und die Lieferung der Wählimpulse vermieden. Eine Prozessoreinheit für jede Satzgruppe eines Vermittlungssystems "EWSD" ist in Siemens, "telcom report" 2 (Juni 1979) 174 bis 189 beschrieben. Die Wählimpulslieferungs-Steuerungen führen sie aber nicht durch.

In Bergmann, Lehrbuch der Fernmeldetechnik, 4. Auflage 1978, S. 454 bis 456, insbesondere Bild C-123 und Text der S. 455 ist ein anderes ähnliches Steuerorgan eines anderen, insoweit ähnlichen Fernmeldesystems "EWSF" beschrieben. Die Erfindung geht davon aus, daß bei diesem System "EWSF" für das Steuerorgan jeweils statt einer Prozessoreinheit eine, aus separaten Einzelteilen sowie mit einer speziell hierfür entworfenen Struktur, aufgebaute Einheit bereits benutzt wird, und zwar jeweils in einem speziellen Steuerorgan für jeweils zu einer Gruppe zusammengefaßte Sätze spezieller Art, z.B. für die Gruppe der die Wählimpulse liefernden Sätze oder für die Gruppe der besondere Prüfungen durchführenden Sätze - wobei also auch für diese Art von Fernmeldesystem hier kein Schutz beansprucht wird. Bei der Erfindung wird eine solche Prozessoreinheit, die aus separaten hergestellten Einzelteilen mit einer speziell hierfür entworfenen Struktur aufgebaut ist, vermieden.

Die Aufgabe der Erfindung betrifft die Steuerung der Sätze, damit diese aus aufeinanderfolgenden Einzelimpulsen bestehende Wählimpulsfolgen liefern.

Bekannt bzw. vorgeschlagen sind Lösungen, bei denen besondere zur Wählimpulslieferung dienende Sätze neben den z.B. zum Verbindungsaufbau dienenden Sätzen angebracht werden, wobei diese Sätze eigene Zeitglieder, z.B. monostabile Flip-Flops, enthalten, die die Dauer der gelieferten Impulse festlegen. Die Erfindung vermeidet den Nachteil, solche Zeitglieder bei den einzelnen Sätzen anbringen zu müssen, sowie den damit zusätzlich verbundenen Nachteil, daß ein erheblicher Aufwand nötig ist, wenn die Dauern der von solchen Sätzen gelieferten Wählimpulse und die Dauern der Pausen zwischen solchen Impulsen, wie meistens gefordert, enge Toleranzen einhalten sollen.

Daneben ist bekannt bzw. vorgeschlagen, in einem zentralen Rechner des Fernmeldesystems alle Wählimpulslieferungen der Sätze gemeinsam zu steuern, indem dieser
zentrale Rechner mittels einer eigenen Zeitmessung für
alle Sätze des Systems prüft und festlegt, ob nun wieder ein Wählimpuls von einem oder von mehreren seiner
Sätze zu liefern ist und ob nun wieder eine Pause zwischen den Wählimpulsen einzulegen, also zu "liefern",
ist. Ein solcher zentraler Rechner braucht eigene, weit
verzweigte, also aufwendige Leitungen oder Busse, um
die Sätze zu steuern - einen solchen Aufwand vermeidet
die Erfindung - oder ein solcher zentraler Rechner
übernimmt auch andere Steuerfunktionen wie Wegesuche,
Leitungszustandüberwachung, Gebührenzählung und dgl. -
die Erfindung vermeidet aber die hierbei auftretende
hohe zeitliche Belastung eines solcherweise angebrachten zentralen Rechners, dessen Belastbarkeit schon bei
normalem alltäglichen Betrieb des Fernmeldesystems, insbesondere bei einem Vermittlungssystem, oft kaum noch
die erwünschten hohen Reserven für Belastungsspitzen
aufweist, z.B. für den starken Fernsprechbetrieb bei
plötzlich einsetzenden Naturkatastrophen. Eine solche
starke zeitliche Belastung eines zentralen Rechners des
Fernmeldesystems durch zentrale Steuerung der Wählimpulslieferung der Sätze vermeidet also die Erfindung
ebenfalls.

Die Erfindung löst daher die Aufgabe, die Sätze zur
Lieferung der Wählimpulse zu steuern, unter den erschwerenden Bedingungen,
- eine eigene Prozessoreinheit, ob zentral oder ob dezentral, für diese Wählimpulslieferungs-Steuerung der
  Sätze zu vermeiden,
- die Herstellung der Prozessoreinheit aus separaten
  Einzelteilen nicht unbedingt vorauszusetzen,

- eigene Zeitglieder mit engsten Toleranzen in jedem der betreffenden Sätze zur Festlegung von den Dauern der Wählimpulse und der Pausen zu vermeiden, und

- vor allem das Satzgruppen-Steuerorgan - das bei der Erfindung an sich im wesentlichen völlig andere Aufgaben als die Wählimpulslieferungs-Steuerung der Sätze hat, sondern z.B. die Aufgabe des Sammelns und Verarbeitens von Verbindungs-Kenndaten, wie der Dauer von Belegungen bzw. der Kennzeichenzustände, hat - möglichst wenig durch zusätzliche Wählimpulslieferungs-Aufgaben zeitlich zu belasten, obwohl keine eigene Prozessoreinheit zur Wählimpulslieferungs-Steuerung der Sätze vorhanden ist. Dann steht das Steuerorgan zeitlich weitgehend für seine anderen Aufgaben zur Verfügung.

Diese Aufgabe unter diesen erschwerenden Bedingungen wird bei dem erfindungsgemäßen, im wesentlichen an sich für andere Aufgaben bestimmten Steuerorgan der Satzgruppe, als zusätzliche Aufgabe, durch die im Kennzeichen des Patentanspruchs 1 angegebenen Maßnahmen gelöst, also dadurch gelöst, daß das Steuerorgan, zur Bearbeitung einer zusätzlichen Aufgabe "Steuerung der Wählimpulslieferung", in Zeiten zwischen der Bearbeitung seiner sonstigen Aufträge,

- einen Auftragsspeicher - bzw. einen entsprechenden Abschnitt des Mehrzweckspeichers - abfragt, der zur Speicherung der Aufträge dient, welche der verschiedenen zugeordneten Sätze derzeit eine Wählimpulsfolge - zur Lieferung dieser Wählimpulse an die an den betreffenden Satz jeweils angeschlossenen Wahlimpulsempfänger, z.B. eines weit entfernten Vermittlungsamtes - zu liefern haben,

- einen Zwischenspeicher - bzw. einen entsprechenden Abschnitt des Mehrzweckspeichers - abfragt, der zur Spei-

0029547

cherung der, im Rahmen der Bearbeitung der im Auftragsspeicher gespeicherten Aufträge, jeweiligen Anzahl der derzeit noch zu liefernden Wählimpulse hinsichtlich der durch das Abfragen ermittelten Aufträge dient,

- anschließend aus den abgefragten Inhalten des Auftragsspeichers und des Zwischenspeichers Einzelwerte ermittelt, die auf einzelne Punkte von Wählimpulsen der zu liefernden, aus Wählimpulsen mit bestimmten Impulsdauern und Pausendauern gebildeten Wählimpulsfolgen bezogen sind und

- über den Sender, gesteuert von einem zentral gesteuerten Takt, die Einzelwerte - abhängig von dem Vorhandensein eines Auftrages im Auftragsspeicher, von dem Inhalt des Zwischenspeichers und von der Anzahl der Taktimpulse seit Beginn des letzten, von dem betreffenden Satz gelieferten Wählimpulses bzw. seit dem letzten, einem Impulsbeginn entsprechenden Einzelwert - an die jeweils betroffenen Sätze seiner Satzgruppe sendet.

Die Unteransprüche betreffen Maßnahmen, die jeweils zusetzliche Vorteile ermöglichen. Es ermöglichen nämlich die Maßnahmen von den Patentansprüchen

2, das Steuerorgan besonders wenig durch die Wählimpulslieferungs-Steuerung zeitlich zu belasten,

3, die Impulsdauer und Pausendauer nach Bedarf zu vergrößern und zu verkleinern, z.B. um das betreffende Fernmeldesystem fähig zu machen, die Wählimpulse mit den abweichenden Impulsdauern und abweichenden Pausendauern an entsprechend verschiedene weitere, durch die gelieferten Wählimpulse gesteuerte Systeme liefern zu können,

4, die für die Speicher benötigte Speicherkapazität verringern zu können, indem der Auftragsspeicher jedenfalls zeitweise die Funktionen des Zwischenspeichers mit übernimmt,

5, die durch Wählimpulslieferungs-Steuerung benötigte zeitliche Belastung des Steuerorgans weiter verringern zu können, indem ständige Adreßumrechnungen zur Einleitung des Lesens der dort gespeicherten Informationen unnötig werden,

6, einen zentralen Rechner des Fernmeldesystems, der das Steuerorgan durch Einschreiben eines Auftrags in den Auftragsspeicher zur Steuerung der Wählimpulslieferung beauftragt, zeitlich, und hinsichtlich seines eigenen Speicherkapazitätbedarfes, zu entlasten, indem der zentrale Rechner zu einem ihm angenehmen Zeitpunkt einen entsprechenden codierten Auftrag an das Steuerorgan der Satzgruppe erteilt, obwohl vielleicht dieses Steuerorgan ältere Aufträge für die gleichen Sätze noch nicht völlig erledigte, und

7, das Steuerorgan zeitlich noch mehr zu entlasten, indem es die Wählimpulslieferungs-Steuer-Aufträge nach und nach in besonders kleinen Etappen bearbeitet, unterbrochen von langen Intervallen zur Bearbeitung seiner anderen Aufträge.

Die Erfindung und Weiterbildungen derselben werden anhand von in den Figuren gezeigten Beispielen des Aufbaus und des Betriebs weiter erläutert, wobei Figur

1 eine Übersicht über ein durch einen zentralen Rechner gesteuertes Vermittlunssystem mit mehreren Satzgruppen-Steuerorganen,

2 den Aufbau eines Steuerorgan-Beispiels einer Satzgruppe,

3 ein Diagramm zur Erläuterung von Beispielen der vom Sender des Steuerorgans gesendeten Einzelwerte und

4 bis 8 Steuerablaufdiagramme eines speziellen Steuerorgan-Beispiels zeigen.

Fig. 1 dient im wesentlichen zur nochmaligen Demonstration der Zusammenfassung von z.B. jeweils 31 Sätzen 00...30 zu je einer Gruppe, eben der Satzgruppe 00...30, die durch ein allen diesen 31 Sätzen jeweils gemeinsames Steuerorgan SGS gesteuert werden, soweit nicht ausnahmsweise eine Steuerung durch den zentralen Rechner CC durchgeführt wird z.B. zur Zuteilung einer Teilnehmernummer für einen dieser Sätze. Die Fig. 1 zeigt also die Lage der Satzgruppen und der ihnen jeweils zugeordneten Steuerorgane SGS. Fig. 1 zeigt damit das stark vereinfachte Schema jedes bekannten, durch einen zentralen Rechner gesteuerten Fernmeldesystems, z.B. Fernsprech-Vermittlungssystems, dessen Sätze gruppenweise durch Steuerorgane gesteuert werden zur Durchführung der vielen verschiedenen Aufgaben, die solche Sätze haben können - und zwar bei der Erfindung auch zur Steuerung der Lieferung von Wählimpulsfolgen durch dasselbe Steuerorgan. Es handelt sich also z.B. um ein Fernmeldesystem, das, mit Ausnahme vom Aufbau der Steuerorgane SGS und vom Arbeitsverfahren dieser Steuerorgane, im Bild 2 der Schrift Siemens telcom report 2 (Juni 1979) 174 bis 189 gezeigt ist. Über diese verschiedenen Satzgruppen 00...30 werden also Verbindungen, z.B. zu weiteren weit entfernt angebrachten elektromechanischen Fernmeldesystemen, hergestellt, wobei das Koppelfeld SN im allgemeinen eine Vielzahl beliebiger, gleichzeitiger, separater Verbindungen, innerhalb des in Fig. 1 gezeigten Fernmeldesystems, bevorzugt zwischen beliebigen Sätzen dieses Systems herstellt. Der zentrale Rechner CC des gezeigten Fernmelsystem steuert und überwacht sowohl das Koppelfeld SN als auch, zumindest indirekt, die verschiedenen dezentralen Steuerorgane SGS; soweit nämlich diese Steuerung oder Überwachung Informationen benötigt, die über das hinausgehen, was im dezentralen Steuerorgan SGS an Informationen jeweils zur Verfügung steht.

Die Fig. 2 zeigt Details eines Ausführungsbeispiels eines erfindungsgemäß ~~betriebenen,~~ in Fig. 1 nur symbolisch gezeigten Steuerorgans SGS. Dieses Steuerorgan enthält eine Prozessoreinheit SGP, nämlich z.B. einen am Markt erwerbbaren standardisierten Mikroprozessor, z.B. den berühmten sog. 8080-Baustein. Das Steuerorgan SGS dient zur Steuerung und Überwachung der zugeordneten Sätze 00...30, und zwar allgemein zur Durchführung der verschiedenen Aufgaben solcher Sätze, vor allem, wie bereits betont, erfindungsgemäß zusätzlich zur Steuerung der Sätze, damit diese Sätze bei Bedarf rechtzeitig mit engen Toleranzen unter den genannten sonstigen erschwerenden Bedingungen einzelne Wählimpulse, z.B. an das angeschlossene weit entfernt angebrachte elektromechanische Fernmeldesystem, liefern.

Ferner ist ein Sender I/Os angebracht, nämlich z.B. einer der bekannten, zum 8080-Baustein gehörenden sog. Imput-Output-Bausteine. Dieser Sender I/Os stellt die Verbindung zu den individuell diesem Steuerorgan zugeordneten Sätzen 00...30 her, indem er in kurzen Zeitabschnitten, z.B. mit binären Impulsen bevorzugt über einen eigenen Adreßbus und über einen separaten eigenen Befehlsbus, einerseits zur Aktivierung des Satzes die Adresse des jeweils zu steuernden Satzes, z.B. des Satzes 00, sowie andererseits Sendeimpulse, nämlich den auszuführenden Befehl oder      sonstige Impulsförmige Informationen, diesem aufgerufenen Satz, hier 00, sendet.

0029547

VPA 79 P 6 2 1 8

Der gleiche Sender I/Os kann auch die Verbindung zu dem zentralen Rechner CC des Fernmeldesystem herstellen, z.B. um irgendwelche, über einen zugeordneten Satz, z.B. 01, soeben empfangenen Informationen an den zentralen Rechner CC weiterzuleiten - falls nicht dazu ein eigenes in Fig. 2 gezeigtes Organ I/Oc verwendet wird.

Das Steuerorgan SGS hat Zugriff zu mehreren Speichern, vgl. M, ZA, ASP, ZS, AC, AZ, UZ, Z, die z.B. eigene Steuerorganspeicher bilden können und eigene Verbindungen 1, 2, 3, 4, 5, 7, 8, 9, mit der Prozessoreinheit SGP aufweisen können oder die alle oder zum Teil auch durch mehrere verschiedene Abschnitte eines oder mehrerer, evtl. auch zentral angebrachter Mehrzweckspeicher gebildet sein können. Daher können alle in Fig. 2 gezeigten Speicher auch z.B. durch Abschnitte eines einzigen Speichers gebildet sein. Die in der Fig. 2 in die Speichersymbole, links und oben, eingetragenen Doppellinien symbolisieren, daß in den Speichern bei Bedarf auch mehrere Bytes, die jeweils aus mehreren Bits gebildet sind, gespeichert sein können, die z.B. einzeln gelesen werden können. Soweit der gespeicherte Speicherinhalt während des Betriebs des Fernmeldesystems nicht mehr verändert wird, kann zumindest ein Teil dieses Speicherinhalts, zur Vermeidung von Betriebsstörungen bei Versorgungsspannungsabschaltungen, auch in einem ROM, also in einem Nur-Lese-Speicher gespeichert sein, wie in Fig. 2 angedeutet ist.

Die verschiedenen Steuerorgane SGS des Fernmeldesystems dienen also zur Steuerung und Überwachung der jeweils zugeordneten Sätze 00...30 mittels der Sendeimpulse zur Erledigung vielfältiger Aufgaben. Erfindungsgemäß stellt ein Teil der Sendeimpulse bestimmte Einzelwerte dar, die nämlich auf einzelne Details einzelner Wählimpulse von - aus Wählimpulsen mit bestimmten Impulsdauern, von z.B.

60 ms, und bestimmten Pausendauern, von z.B. 40 ms, gebildeten - Wählimpulsfolgen bezogen sind. Der Betrieb
des Steuerorgans SGS hat dazu z.B. folgenden Ablauf:

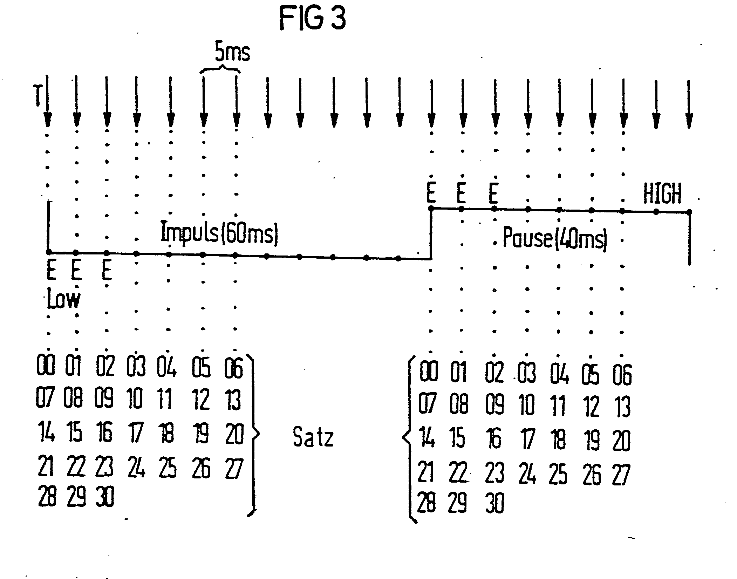

Das Steuerorgan SGS erhält, z.B. von einem zentralen
Rechner CC, zunächst codiert summarisch den Auftrag,
daß es über einen bestimmten Satz, z.B. 00, seiner
Sätze 00...30 eine bestimmte Anzahl von Wählimpulsen
als Wählimpulsfolge liefern soll, und zwar indem das
Steuerorgan SGS nicht etwa den codierten summarischen
Auftrag an den betreffenden Satz, hier 00, einfach
weiterleitet so wie er ist, sondern indem das Steuerorgan SGS diesen Auftrag selbst in ganz spezieller
Weise zunächst bearbeitet, indem nämlich das Steuerorgan SGS selbst die einzelnen Wählimpulse mit bestimmten Dauern der Impulse und der Pausen festlegt, indem
es also z.B. die richtigen Zeitpunkte für den Beginn
der einzelnen Wählimpulse, und für den Beginn der einzelnen Pausen nach solchen Wählimpulsen mittels eines
zentral gesteuerten Taktes T festlegt, vgl. Fig. 3.
Diese Festlegung kann das Steuerorgan SGS z.B. durch
Abzählen der Zeitmarkierungen, d.h. Takte T, des zentral, z.B. im zentralen Rechner CC, angebrachten Taktgebers erreichen, wobei das Steuerorgan SGS, derart abhängig von dem zentral gesteuerten Takt T, einzeln festgelegte Details bzw. Einzelwerte E hinsichtlich eines
jeden Wählimpulses an den betreffenden Satz, hier 00,
sendet. Der zunächst gesendete Einzelwert E stellt
z.B. einen impulsförmigen Befehl "LOW" = "0" an den betreffenden Satz dar, ab sofort mit der Lieferung eines
Wählimpulses zu beginnen - wobei zur Erhöhung der Betriebsicherheit dieser Befehl "0" an den gleichen Satz
an sich zwar noch mehrmals wiederholt werden könnte,
aber meistens nicht mehr wiederholt zu werden braucht.
Der später gesendete erste Einzelwert E = HIGH stellt dann den Befehl an den gleichen Satz dar, ab sofort mit der "Lieferung" der Pause zwischen Wählimpulsen zu beginnen. Die gesendeten Einzelwerte E betreffen also einzelne Abschnitte, bevorzugt den Beginn und das Ende, des einzelnen Wählimpulses, den der adressierte Satz, hier OO, an einen Wählimpulsempfänger liefern soll.

Zur Bearbeitung dieses codierten Wählimpulslieferungs-Steuerauftrages, hier des durch den zentralen Rechner CC gebildeten Auftraggebers, hat das Steuerorgan SGS Zugriff zu dem in Fig. 2 gezeigten Auftragsspeicher ASP, bzw. zu einem entsprechenden Abschnitt eines Mehrzweckspeichers; der Mehrzweckspeicher enthält z.B. auch den, alle sonstigen Aufträge an das Steuerorgan SGS und sonstige Informationen speichernden, Hauptspeicher M als einen besonderen Abschnitt. Der Auftragsspeicher ASP dient zur Speicherung bzw. zur Abfrage der Aufträge, welcher der verschiedenen zugeordneten Sätze OO...30 Wählimpulse zu liefern haben, bevorzugt sogar zunächst, welche dieser Sätze jeweils welche Anzahl von Wählimpulsen insgesamt jeweils als eine Wählimpulsfolge zu liefern haben, zur Weitergabe dieser Wählimpulse an den mit dem betreffenden Satz jeweils verbundenen Wahlimpulsempfänger, z.B. an den Wahlimpulsempfänger eines weit entfernten Vermittlungsamtes.

Das Steuerorgan SGS weist außerdem einen Zwischenspeicher ZS auf, bzw. einen entsprechenden Abschnitt des Mehrzweckspeichers, vgl. den obigen Hinweis auf den Hauptspeicher M. Der Zwischenspeicher ZS dient zur Speicherung der jeweiligen Anzahl der von den betroffenen Sätzen derzeit noch zu liefernden Wählimpulse, hinsichtlich der verschiedenen derzeit zu bearbeitenden derartigen Aufträge.

Das Steuerorgan SGS bzw. die Prozessoreinheit SGP stellt also, sobald sie sich jeweils wieder der Bearbeitung der Wählimpulslieferungs-Steuerung zuwendet, anhand des Inhalts des Auftragsspeichers ASP fest, ob überhaupt ein solcher Auftrag vorliegt, und wenn ja, dann für welchen Satz seiner Satzgruppe 00...30; wenn nein, wendet sich das gleiche Steuerorgan SGS sogleich wieder seinen sonstigen Aufgaben zu. Wenn ein Wählimpulslieferung-Steuerauftrag vorliegt, stellt das Steuerorgan SGS zusätzlich anhand des damit korrespondierenden Inhalts des Zwischenspeichers ZS fest, ob bereits alle Wählimpulse von dem betroffenen Satz geliefert sind; - wenn ja, liefert das Steuerorgan SGS nur noch eine quittierende "Erledigt"-Meldung an den Auftraggeber, z.B. an den zentralen Rechner CC, und löscht evtl. den Auftrag im Auftragsspeicher ASP; wenn nein, bereitet das Steuerorgan SGS die Sendung eines den betroffenen Satz zur Impulslieferung veranlassenden Einzelwertes E vor, und zwar bevorzugt speichert das Steuerorgan SGS den Einzelwert E vorläufig, z.B. in einem besonderen, in Fig. 2 durch Verdoppelung von Linien symbolisch angedeuteten Speicher des Senders I/Os, bis das Steuerorgan SGS, z.B. durch Abzählen der Takte T, beim gewünschten Wählimpulsbeginn, diesen Einzelwert E an den jeweils betroffenen Satz über seinen Sender I/Os sendet. Diese vorübergehende Speicherung des zu sendenden Einzelwertes E, z.B. im Sender I/Os, ist nicht nötig, falls das Steuerorgan SGS, z.B. mittels eines besonderen Schieberegisters, ständig die Takte T mitzählt und falls das Steuerorgan SGS nur dann sich seiner Aufgabe, die Wählimpulslieferung zu steuern, durch Abfragen des Auftragsspeichers ASP wieder zuwendet, wenn vorher durch Abzählen der Takte T festgestellt ist, daß nun sofort, oder wenigstens nahezu sofort, ein Wählimpuls zu liefern wäre, falls überhaupt ein Auftrag dazu im Auftragsspeicher ASP gespeichert ist.

Ein solcher Einzelwert E, vgl. Fig. 3, kann also z.B. durch eine binäre Null, vgl. dort "LOW", an einer bestimmten Stelle eines, z.B. durch parallel gesendete Bits gebildeten, Befehlsbyte dargestellt sein, wobei der Rest dieser Bytestellen, nach Dekodierung in einem eigenen Dekodierer des betroffenen Satzes, den betroffenen Satz im Prinzip zur Lieferung eines Wählimpulses oder einer Pause befähigt - z.B. durch Steuerung eines Schalters, der einen entsprechenden Generator solcher Wählimpuls-Leitungszustände an den Signaleingang des betroffenen Satzes anschließt.

Das Steuerorgan SGS kann also z.B. auch anschließend, nach Ablauf der beabsichtigten Dauer des gelieferten Wählimpulses, einen weiteren, anderen Einzelwert E an denselben betroffenen Satz senden, damit dieser Satz aufhört, den Zustand "Wählimpuls" zu liefern, sondern damit dieser Satz nun beginnt, den Zustand "Pause" zu liefern - falls hier der betreffende Satz keinen eigenen monostabilen Schalter mit entsprechender Schließungsdauer zum vorübergehenden Anschließen des Generators der Wählimpuls-Leitungszustände aufweist. Die Sendung eines weiteren, anderen Einzelwertes E - z.B. einer binären Eins, vgl. HIGH in Fig. 3, in Verbindung mit demselben oben genannten Rest der Bytestellen, der den Satz zur Lieferung von Wählinformationen befähigt - bei Beginn der beabsichtigten Pause ist jedenfalls dann günstig, falls der betreffende Satz ein bistabiles Flip-Flop bzw. einen anderen bistabilen Schalter enthält, der, gesteuert von derartigen Einzelwerten E "LOW" oder "HIGH", den Zustand "Wählimpuls" oder "Pause" über den entsprechenden Signalausgang des betroffenen Satzes an den Wählimpulsempfänger liefert.

Damit nicht alle Sätze der Satzgruppe 00...30 dieses Steuerorgans gleichzeitig einen Wählimpuls oder eine Pause senden, sondern nur der jeweils betroffene Satz oder nur die jeweils betroffenen Sätze, sendet die Prozessoreinheit SGP über den Sender I/Os an alle seine verschiedenen Sätze 00...30 nicht nur das erwähnte Byte mit einer Null oder Eins an der dem auszusendenden Leitungszustand entsprechenden Bytestelle, sondern zusätzlich an alle seine Sätze auch noch die Adresse des jeweils betroffenen Satzes, z.B. über einen eigenen mehradrigen Adreßbus, an den zwar alle seine Sätze angeschlossen sind, wodurch aber nur der jeweils betroffene Satz zur Lieferung eines Wählimpulses oder einer Pause veranlaßt wird, aber die übrigen Sätze völlig unbeeinflußt bleiben.

Ein jeweils eigenes Zeitglied mit engsten Toleranzen, z.B. ein monostabiles Flip-Flop, kann in den Sätzen weggelassen werden, falls sowohl der Wählimpulsbeginn als auch der Pausenbeginn, als entsprechende vom Steuerorgan SGS ermittelte Einzelwerte E, an die jeweils betroffenen Sätze gesendet werden.

Der Zeitaufwand des Steuerorgans SGS für die Bearbeitung der Wählimpulslieferungs-Steueraufgabe, gerechnet vom jeweiligen Abfragen des Auftragsspeichers ASP bis zur Sendung des jeweiligen Einzelwertes "LOW" oder "HIGH", ist bei jeder Variante der Erfindung sehr gering, z.B. nur 300 Mikrosekunden lang, wobei z.B. nur alle 100 Millisekunden vom betroffenen Satz ein Wählimpuls zu senden ist, falls überhaupt ein Wählimpuls zu senden ist.

Daher hat bei der Erfindung das Steuerorgan SGS nahezu uneingeschränkt Zeit für alle seine sonstigen Aufgaben wie z.B. Leitungsprüfung, Signalempfang und/oder Durchschaltung eines Verbindungsweges innerhalb des betreffenden Satzes, weil das Steuerorgan SGS bei dieser Art von Wählimpulslieferungs-Steuerung trotz hoher Effizienz nahezu unbelastet durch diese Wählimpulslieferungs-Steuerung bleibt. Gleichzeitig ist der zentrale Rechner CC ebenfalls nicht mehr stark durch derartige, nämlich nur summarische Wählimpulslieferungs-Aufträge belastet. Solche summarischen Aufträge an das Steuerorgan SGS brauchen nämlich z.B. nur noch einen irgendwie gearteten Hinweis auf die Adresse des jeweils betroffenen Satzes zu enthalten - das Steuerorgan SGS kann daraus die wahre Adresse des jeweils betroffenen Satzes selbst ermitteln, z.B. mittels eines in Fig. 2 gezeigten, besonderen, Satzadressen umformenden Speichers AG - sowie einen codierten Hinweis auf einen Wählimpulslieferungsauftrag zu enthalten - der z.B. durch die Startadresse eines im Hauptspeicher M gespeicherten entsprechenden Mikroprogrammes gebildet sein kann - sowie einen Hinweis auf die Anzahl der insgesamt zu sendenden Wählimpulse zu enthalten, wozu insgesamt wenige Bits, z.B. als parallel übertragene Bits eines einzigen Byte, vom Rechner CC zum Steuerorgan SGS übertragen werden müssen. Alle Detailarbeit zur Wählimpulslieferungs-Steuerung des jeweils betroffenen Satzes leistet, wiederum mit besonders wenig Zeitaufwand, das Steuerorgan SGS selber.

Das Steuerorgan SGS kann, durch eine entsprechende Einstellung je nach Bedarf, verschiedene Impulsdauern und verschiedene Pausendauern festlegen, wenn man die entsprechend vorgegebene Anzahl der Takte T ändert, die eine Sendung der verschiedenen Einzelwerte E auslösen, vgl. LOW und HIGH in Fig. 3. Dazu kann man, z.B. in der

Prozessoreinheit SGP, eine durch den Takt T gesteuerte Zählkette variabler Länge anbringen, bzw. in analog wirkender Weise eine Zählzelle ZA bzw. einen Speicher des Steuerorgans SGS anbringen, um darinnen eine, jeweils fortlaufend im Rhythmus des Taktes T um eine Werteinheit erhöhte, Zahl einzuschreiben, also z.B. nacheinander die Zahlen 1, 2, 3, 4, 5 ... usw., und zwar bis eine vorher bestimmte Grenzzahl, z.B. die Zahl 12, erreicht ist, die bestimmt ist, einen Wechsel des Einzelwertes E von LOW nach HIGH, oder umgekehrt von HIGH nach LOW, zu veranlassen. Durch Änderung der Zählkettenlänge, bzw. durch die analog wirkende Änderung der Grenzzahl, kann man dann eine beliebige nachträgliche Änderung der Impulsdauer, und in gleichartiger Weise auch für sich der Pausendauer, erreichen. Dabei kann die die Impulsdauer festlegende Zählzelle, bzw. die diese Zählzelle oder die solche Zählzellen enthaltende, die Impulsdauer und Pausendauer festlegende Einheit, vgl. ZA in Fig. 2, an ihrem Ausgang einen dem Pausendauerbeginn entsprechenden zweiten Sendeimpuls, z.B. HIGH, bereistellen sowie, evtl. auch an einem anderen statt am gleichen Ausgang, einen anderen, dem Impulsdauerbeginn entsprechenden ersten Sendeimpuls, z.B. LOW, bereitstellen.

Besonders wenig Speicherplätze werden benötigt, falls der Auftragsspeicher ASP die Funktion des Zwischenspeichers ZS mit übernimmt, indem mittels der Prozessoreinheit ZSP laufend in den Auftragsspeicher ASP die Anzahl der derzeit noch zu liefernden Wählimpulse überschrieben wird über die dort ursprünglich gespeicherte Information, welche Anzahl von Wählimpulsen ursprünglich insgesamt zu liefern sind. Man braucht dann nämlich keinen eigenen separaten Zwischenspeicher ZS mehr.

Falls der Auftragsspeicher ASP und/oder der Zwischenspeicher ZS mehrere - hier einunddreißig, entsprechend
den einunddreißig Sätzen 00...30 - ständig gleiche Bereiche, die jeweils fest den Sätzen - hier 00...30 -
zugeordnet sind, aufweist, braucht das Steuerorgan SGS
nicht mehr ständig neu die Adressen in diesen Speichern
zu errechnen, um gespeicherte Aufträge bzw. Informationen wieder lesen zu können, weil alle diese Speicherinhalte ständig die gleichen Adressen behalten und dann,
mangels Adressenerrechnung, auch besonders schnell, mit
besonders geringer zeitlicher Belastung des Steuerorgans
SGS durch die Wählimpulslieferungs-Steuerung, gelesen
werden können.

Wenn der Auftragsspeicher ASP, für mindestens einen Satz
z.B. 00 seiner Satzgruppe 00...30, auch die Anzahl der
Wählimpulse späterer Wählimpulsfolgen speichert, die erst
später, nach Abschluß von dem derzeit für denselben Satz
bearbeiteten Wählimpulsfolgenauftrag, zu liefern sind,
dann ist die zeitliche und speicherplatzbedarfsmäßige
Belastung des zentralen Rechners CC besonders gering,
ohne die zeitliche Belastung des Steuerorgans SGS zu
erhöhen.

Besonders wenn das Steuerorgan SGS für manche seiner
sonstigen, nicht die Wählimpulslieferung betreffenden
Aufgaben oft rasch zur Verfügung stehen muß, z.B. im
Informationsaustausch mit einem zentralen Rechner CC,
dann ist oft ratsam, den Auftragsspeicher ASP nicht auf
Wählimpulslieferungs-Steueraufträge sogleich hinsichtlich aller zugeordneter Sätze 00...30 abzufragen und
dann sogleich alle diese Aufträge mit der Sendung des
jeweils ermittelten Einzelwertes E oder mit der Lieferung der quittierenden "Erledigt"-Meldung an den zentralen Rechner CC und Löschung des Auftrags im Arbeitsspeicher ASP zu erledigen, bevor sich das Steuerorgan
SGS wieder seinen sonstigen Aufgaben zuwendet. Statt
dessen kann das Steuerorgan SGS nämlich auch in einem
länger dauernden Zeitabschnitt von z.B. ca. 5 ms - nämlich zwischen der gegenüber diesem Zeitabschnitt kurz,
z.B. 300 $\mu$s, dauernden Etappe zur Lieferung von Einzelwerten E für einen oder einzelne der zugeordneten Sätze,
z.B. nur für die Sätze 00, 07, 14, 21, 28, und der 5 ms
späteren, ähnlich kurz, z.B. wieder ca. 300 $\mu$s, dauernden Etappe zur Lieferung von Einzelwerten E für andere
der zugeordneten Sätze, z.B. für die anderen Sätze 01,
08, 15, 22, 29 - routinemäßig die sonstigen, nicht auf
Lieferung solcher Einzelwerte E gerichteten Aufträge
ca. 5 ms lang bearbeiten, nämlich z.B. die auf Ausgabe
sonstiger Informationen an diese Sätze 00...30 gerichteten Aufträge bearbeiten oder z.B. die auf Ausgabe über
I/Os an zentrale Vermittlungssystemorgane, z.B. CC, gerichteten Aufträge bearbeiten. Diese Variante des Betriebsablaufes wird nun anhand des in Fig. 3 gezeigten
Beispiels näher erläutert:

In diesem Fall bearbeitet das Steuerorgan SGS seine
Wählimpulslieferungs-Steueraufträge etappenweise, nämlich, z.B. angestoßen durch einen ersten Takt T der
zentralen Takte T, Aufträge, falls solche überhaupt vorhanden sind, für einen oder mehrere der in Fig. 3 angegebenen Sätze 00, 07, 14, 21, 28 durch Lieferung der
Wählimpulsbeginn-Einzelwerte E = LOW. Erst nach 5 ms,
nämlich erst nach dem viel späteren Anstoß durch einen
zweiten Takt T, bearbeitet das Steuerorgan SGS gleichartige Aufträge, falls solche überhaupt vorhanden sind,
für die nächste Untergruppe seiner Sätze, nämlich für
einen oder mehrere der Sätze 01, 08, 15, 22, 29 durch
Lieferung von Einzelwerten E = LOW; schließlich angestoßen durch einen dritten Takt T entsprechend für die Sätze 02, 09, 16, 23, 30; usw.. Ab dem achten Takt T bis zum z.B. zwölften Takt T wird überhaupt kein Wählimpulslieferungs-Steuerauftrag bearbeitet, falls die Wählimpulsdauer, vgl. Fig. 3, 60 ms betragen soll. Erst ab dem dreizehnten Takt T, vgl. Fig. 3, bis zum neunzehnten Takt T werden die dem Pausenbeginn entsprechenden Einzelwerte E = HIGH wieder in gleichartigen Etappen gesendet, falls solche Wählimpulslieferungs-Steuerauf-träge für die jeweils betroffenen Sätze überhaupt im Auftragsspeicher ASP eingeschrieben sind. Durch diese etappenweise Bearbeitung werden zwar ein Teil der Wähl-impulse und ein Teil der Pausen nicht schon mit dem ersten und dem vierzehnten Takt T beginnen, sondern erst mit späteren Takten T, also z.B. mit dem zweiten und dem fünfzehnten Takt T, was aber oft zulässig ist. Die Wählimpulsdauer und Pausendauer wird aber für sich jeweils die festgelegte Dauer mit sehr enger Toleranz aufweisen und das Steuerorgan SGS steht bei Bedarf viel eher in den ca. 5 ms dauernden Zeitabschnitten wieder für seine sonstigen Aufgaben zur Verfügung, wobei also fast die ganzen 5 ms zwischen zwei aufeinander folgenden Takten T als Zeitabschnitt jeweils für diese rasche Bearbeitung der sonstigen Aufträge zur Verfügung stehen.

Innerhalb einer solchen Etappe - also z.B. für die Bearbeitung von Wählimpulslieferungs-Steueraufträgen für die Untergruppe, die durch die Sätze 00, 07, 14, 21, 28 gebildet ist - können alle diese Aufträge, falls überhaupt Aufträge für gleichzeitig mehrere Sätze dieser Untergruppe vorliegen, auch nacheinander in Unteretappen bearbeitet werden, indem während dieser Etappe von wenigen zehn Mikrosekunden zunächst als erste Unteretappe der Auftrag für z.B. den Satz 00, dann als zweite Unteretappe für z.B. den Satz 14 und anschließend als dritte Unteretappe für z.B. den Satz 21 bearbeitet wird, und indem anschließend - ca. 5 ms vor der nächsten Etappe
für die Untergruppe aus den Sätzen 01, 08, 15, 22, 29 -
das Steuerorgan SGS sich zunächst wieder ausgiebig seinen sonstigen Aufträgen zuwendet. Dieses Beispiel weist
also einen Ablauf auf, der durch einen exakten, zyklisch
wiederkehrenden Anreiz T, z.B. durch eine Unterbrechung
der Bearbeitung der sonstigen Aufgaben bzw. der entsprechenden Programme des Steuerorgans SGS im 5 ms-Takt,
etappenweise aufrufbar ist.

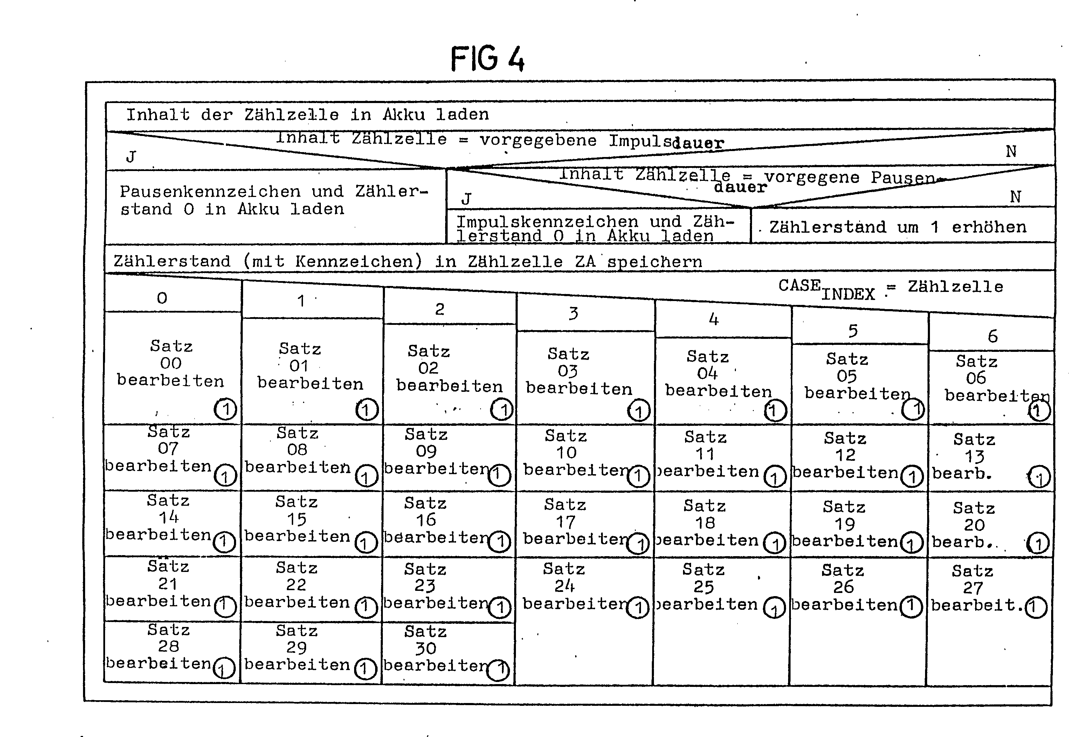

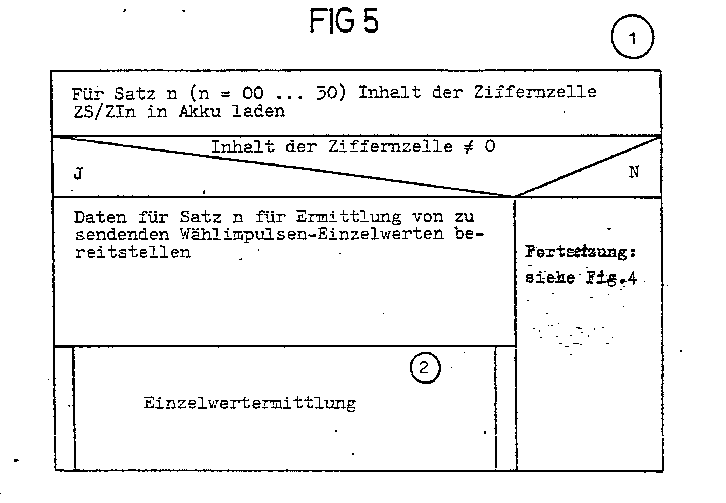

Ein ganz spezielles derartiges Beispiel für den Ablauf
des Betriebes mittels Unteretappen wird nun anhand der
Fig. 2 und 3 in Verbindung mit den Fig. 4 bis 8, die
Betriebsablaufdiagramme darstellen, sehr detailliert
beschrieben, wobei zunächst allgemein auf Details des
besonderen Aufbaus des hierzu verwendeten Steuerorgans
SGS eingegangen wird.

Ein besonderer Teil des Steuerorgans SGS, z.B. eine
Zählzelle ZA bzw. ein Schieberegister, mißt wie oben
beschrieben, die Zeitspannen, die als Dauern der Wählimpulse und der Pausen vorher, z.B. vom Hersteller, eingestellt wurden, und legt zudem fest, welche Anreize T
dieser Anreize, bzw. welche Unteretappen, zum Zustand
"Wählimpuls" und welche Anreize bzw. Unteretappen zum
Zustand "Pause" gehören. Bei z.B. einem 5 ms-Takt T,
vgl. Fig. 3, ergibt eine Einstellung der Wählimpulsdauer
auf 60 ms zunächst zwölf Etappen à 5 ms Abstand zum Zustand "Wählimpuls", und anschließend eine Einstellung
der Pausendauer auf 40 ms acht Etappen à 5 ms Abstand
zum Zustand "Pause", anschließend wieder zwölf solche
Etappen zum Zustand "Wählimpuls", usw. abwechselnd
während der gesamten Betriebszeit dieses Fernmeldesystembeispiels, wobei die einzelnen Etappen auch jeweils
mehrere Unteretappen enthalten können.

Während der ersten Etappe zum Zustand "Wählimpuls" werden in diesem speziellen Beispiel für eine aus Belastungsgründen vertretbare Anzahl von Sätzen, z.B. nur für die fünf Sätze 00, 07, 14, 21, 28, der Auftragsspeicher ASP auf Wählimpulslieferungs-Steueraufträge untersucht und sogleich die jeweiligen Sendungen der Einzelwerte E für Wählimpulsbeginn, also z.B. "LOW", in Unteretappen durchgeführt. In der nächsten Etappe, hier nach 5 ms, werden also eine nächste entsprechende Anzahl von Sätzen, z.B. alle fünf Sätze 01, 08, 15, 22, 29, in gleicher Weise bearbeitet, usw., wie bereits anhand der Fig. 3 erläutert wurde.

Ist bei diesem speziellen Beispiel nach entsprechend vielen Etappen der Auftragsspeicher ASP für alle, hier einunddreißig, Sätze 00...30 der Satzgruppe auf Aufträge durchsucht, und sind damit alle Wählimpulse der momentan vorhandenen Wählimpulslieferungs-Steueraufträge durch Sendung von Einzelwerten E, hier = LOW, begonnen worden, dann wird bei den restlichen Etappen zum Zustand "Wählimpuls" keine Bearbeitung mehr begonnen, sondern sofort wieder nach den sonstigen Aufgaben, z.B. im Hauptspeicher M, gesucht.

Wechselt nach, hier zwölf, Etappen bzw. Anreizen T der Zustand der Zählzelle ZA bzw. Schieberegister von "Wählimpuls" nach "Pause", dann wird nun wieder, für z.B. fünf Sätze pro Etappe, der Auftragsspeicher ASP nach entsprechenden Wählimpulslieferungs-Steueraufträge durchsucht und es werden für diese Sätze bei Bedarf die Einzelwerte E, hier = HIGH, für Wählimpulsende bzw. für Pausenanfang den betreffenden Sätzen gesendet.

Wurden auf diese Weise im speziellen Beispiel alle Wählimpulse einer Wählimpulsfolge an einen betroffenen Satz gesendet, dann wird dem zentralen Rechner CC, bzw. einem entsprechenden anderen Auftragsgeber des zugehörigen Wählimpulslieferungs-Steuerauftrages, nämlich z.B. zur Aufforderung "Sende nächsten Wählimpulslieferungs-Steuerauftrag für denselben Satz", eine quittierende Meldung, die "Erledigt-Meldung", geliefert.

Bei diesem speziellen Beispiel wiederholen sich also die Anreize T bzw. Etappen in einem Taktraster, wodurch die geforderten Zeitgenauigkeiten eingehalten werden können. Eine Zählzelle ZA bzw. ein Schieberegister wird zur Einstellung der Wählimpulsdauern und der Pausendauern, und zwar jeweils als Vielfache des Abstandes, hier 5 ms, der Takte T, verwendet. Den einzelnen Sätzen ist im Auftragsspeicher ASP in diesem speziellen Beispiel jeweils individuell ein fester, nie veränderter Bereich zugeordnet, um eine Adreßumrechnung allein zum Lesen dieses Auftragsspeichers ASP, und damit Zeitverluste, zu vermeiden.

Im speziellen Beispiel wird außerdem statt eines Schieberegisters eine Zählzelle ZA, vgl. Fig. 2, als der wesentliche Bestandteil eines Anreizgebers, der Etappen auslöst, verwendet, um damit die Dauern der Wählimpulse und der Pausen einzustellen. Abhängig vom Inhalt dieser Zählzelle ZA werden also alle einunddreißig Sätze in sieben Etappen zu maximal je fünf Sätzen pro 5 ms bearbeitet, vgl. Fig. 3.

Es ist jedoch noch ein Speicher AS angebracht, und zwar zur Umrechnung der im Wählimpulslieferungs-Steuerauftrag mit einem besonderen Code enthaltenen Adresse des jeweils betroffenen Satzes in die wahre, vom Sender I/Os zu sendende Adresse dieses betroffenen Satzes. Dazu ist in diesem Speicher AC, unter der im Auftrag enthaltenen Adresse der Sätze, jeweils als Speicherinhalt die wahre, vom Sender I/Os zu sendende Adresse dieser Sätze eingeschrieben.

Dadurch werden also im speziellen Beispiel, entsprechend den Inhalten im Auftragsspeicher ASP, Wählimpulsfolgen über einen bzw. über mehrere der zugeordneten Sätze 00...30 an Wählimpulsempfänger geliefert, die beendet werden, wenn im Zwischenspeicher ZS schließlich "Auftrag löschen" = "alle Wählimpulse sind geliefert" eingetragen ist, indem die derzeit noch zu liefernde Anzahl von Wählimpulsen Null beträgt. Der Zwischenspeicher ZS ist im speziellen Beispiel jedoch weitgehend identisch mit dem Auftragsspeicher ASP, indem in dem Auftragsspeicher ASP jeweils die Anzahl der derzeit noch zu liefernden Wählimpulse, über die dort ursprünglich eingetragenen Anzahl der insgesamt zu sendenden Wählimulse, für die betreffende Wählimpulsfolge überschrieben wird. Im Auftragsspeicher ASP steht also zunächst zwar jeweils der ursprüngliche Auftrag selbst, später aber nur noch der Inhalt, der in den Zwischenspeicher ZS einzuschreiben ist. Dieser Speicher ASP wird hier also jeweils als Auftragsspeicher und als Zwischenspeicher verwendet.

In den Auftragsspeicher ASP sind also für alle einunddreißig Sätze in jeweils individuell zugeordneten Bereichen die wesentlichen Daten eingetragen, die jeweils zum Senden von Einzelwerten E an diese Sätze 00...30 benötigt werden. Diese Daten wurden vorher von einem Auftraggeber, z.B. von einem zentralen Rechner CC, dort eingetragen und sie enthalten neben der Angabe, wieviel Wählimpulse noch zu liefern sind, auch noch die - erst noch umzucodierenden - Adressen der jeweils betroffenen Sätze.

In die Zählzelle ZA ist also neben einem Kennzeichen, ob derzeit nur Wählimpulse oder nur Pausen zu liefern sind, noch ein vom Takt T gesteuerter Zählerstand eingetragen, wobei der Zählerstand von jedem Takt T um eine Einheit erhöht wird, solange das Kennzeichen unverändert bleibt. Ändert sich das Kennzeichen, dann wird der Zählerstand zunächst wieder zurückgestellt und erst anschließend mit jedem Takt T wieder erhöht.

In den verschiedenen Speichern, oder in entsprechenden speziellen Bereichen des Hauptspeichers M, können zumindest ein Teil der Befehle bzw. entsprechende Daten in der durch den Ablauf vorgegebenen Reihenfolge einschließlich Sprüngen eingeschrieben sein, insbesondere in einem störungssicheren ROM, also in einem Nur-Lese-Speicherbereich. Diese den Ablauf festlegenden Befehle steuern die üblichen verknüpfenden Einheiten und die üblichen Register der hier durch einen sog. 8080-Baustein gebildeten Prozessoreinheit GSP.

In den Speichern AZ, UZ und Z, die man auch als Bestandteil des Auftragsspeichers ASP auffassen könnte, sind zusätzliche Daten eingeschrieben, die sozusagen eine Warteschlange für die "Erledigt-Meldungen" bezüglich dieser Aufträge, insbesondere innerhalb einer Etappe, betreffen, falls mehrere solche Aufträge gleichzeitig zu bearbeiten sind. Im Speicher Z sind "Erledigt-Meldungen" inform einer Warteschlange. Im Speicher UZ sind Daten, die zu erkennen gestatten, ob die Warteschlange im Speicher Z, wegen derzeit zu vieler "Erledigt-Meldungen" auf einmal, überläuft. Im Speicher AZ sind Daten, die gestatten, die Eintragungen in den Speicher Z so zu kennzeichnen, daß der Anfang und das Ende der Warteschlange erkennbar wird.

Die Fig. 4 bis 8 zeigen nun die wesentlichen Teile des Betriebsablaufes dieses speziellen Beispiels anhand von untereinander angegebenen Kästchen.Der Ablauf beginnt jeweils mit der im obersten Kästchen eingetragenen Maßnahme, wonach schrittweise die in den jeweils darunter angegebenen Kästen eingetragenen Maßnahmen folgen.

Gemäß dem obersten Kästchen von Fig. 4 wird bei Beginn jeder Etappe, genauer: aufgrund des durch einen Takt T ausgelösten Anreizes, zunächst der Inhalt der Zählzelle ZA für die Bestimmung der Dauer von Wählimpuls und Pause gelesen. Danach wird dieser Inhalt mit dem Soll-Wert der Dauer, bzw. mit der Grenzzahl, verglichen. Stimmen der Inhalt der Zählzelle ZA und der Soll-Wert überein, vgl. "J" ="Ja" in Fig. 4, dann werden das "Pausen"-Kennzeichen und ein Zählerstand "Null" zunächst in das Register "Akku" geladen und dann von dort in die Zählzelle ZA eingetragen, d.h. die vorgegebene Wählimpulsdauer ist erreicht und als nächstes ist eine Wählpause zu liefern. Stimmen aber der Inhalt der Zählzelle ZA und der Soll-Wert der Impulsdauer nicht überein, vgl. "N" = "NEIN" in Fig. 4, dann wird der Inhalt der Zählzelle ZA mit dem Soll-Wert der Pausendauer verglichen. Bei Übereinstimmung, vgl. "J" in Fig. 4, werden danach das "Impuls"-Kennzeichen und der Zählerstand "Null" in die Zählzelle ZA eingetragen, d.h. die vorgegebene Pausendauer ist erreicht, als nächstes ist ein Wählimpuls auszusenden.

Wenn der Inhalt der Zählzelle ZA mit keinem der beiden festgelegten Werte übereinstimmt, vgl. "N" in Fig. 4, wird die in der Zählzelle ZA zu speichernde Zahl um eine Einheit erhöht. Die Zählung der Zeit erfolgt im 5 ms-Raster, bedingt durch den 5 ms-Takt T.

Anschließend wird die in die Zählzelle ZA eingetragene Zahl bzw. dieser Zählerstand als Index für die nun folgende CASE-Verzweigung bereitgestellt. Jede der sechs Verzweigungen entspricht einer der sechs vorgesehenen Etappen. Entspricht der Zählerstand ZA einem der sieben Indexwerte 0 bis 6, vgl. Fig. 4, dann werden die jeweils darunter eingetragenen Maßnahmen bzw. Sätze n nacheinander bearbeitet, also in Unteretappen bearbeitet. Für den zu bearbeitenden Satz n wird gemäß dem Hinweis ① jeweils nach dem in Fig. 5 gezeigten Schema aus dem Inhalt der zugehörigen Zelle des Auftragsspeichers bzw. Zwischenspeichers ASP = ZS ermittelt, ob ein Einzelwert E zu senden ist, genauer: wieviel Wählimpulse noch zu liefern sind. Beträgt diese Anzahl "Null", vgl. "N" in Fig. 5, wird gemäß Fig. 4 sofort zum nächsten Satz n dieser Etappe übergegangen, bzw. die Etappe beendet und auf die sonstigen Aufgaben dieses Satzgruppen-Steuerorgans SGS übergegangen. Beträgt diese Anzahl aber mehr als "Null", vgl. "J" in Fig. 5, werden die codierte zugehörige Adresse im Speicher AC, die vollständige Adresse der die zugehörigen Daten enthaltenden Zellen des Zwischenspeichers ZS bzw. des Auftragsspeichers ASP, und die wahre Adresse des Satzes n, die mittels des Speichers AC ermittelt wurde, in Registern der Prozessoreinheit SGP bereitgestellt. Dann werden nacheinander die Aufträge für die in Fig. 4 jeweils eingetragenen Sätze n in den genannten Unteretappen bearbeitet, und zwar, wie in den Figuren 5 bis 8 durch ②, ③ und ④ symbolisiert, jeweils nach dem in Fig. 5 bis 8 gezeigten Schema. Für die Bearbeitung der Aufträge für die Sätze in den einzelnen in Fig. 4 gezeigten CASE-Verzweigungen, d.h. Etappen wurde übrigens eine lineare Codierung gewählt, um Adreßumrechnungen möglichst zu vermeiden und um dadurch die jeweilige Dauer der Etappen möglichst kurz zu halten.

Wegen der in den Fig. 3 und 4 gezeigten Reihenfolge der Einzelwertsendungen bzw. Wahlimpulslieferungen, wird die Anzahl der in einer Etappe zu bearbeitenden Aufträge möglichst gleichmäßig über sieben möglichen CASE-Verzweigungen verteilt. Falls gleichzeitig z.B. für die sieben Sätze 00...06 eine Wahlimpulslieferung notwendig ist, werden die Einzelwertsendungen auf sieben Etappen verteilt.

Die Wahlimpulsdauer bzw. Wahlpausendauer kann durch Änderung der Grenzzahlen auch nachträglich beliebig variiert werden. Die Mindestlänge für den Wählimpuls und für die Pause beträgt jeweils 35 ms, falls sieben CASE-Verzweigungen, d.h. Etappen vorgesehen werden, die nacheinander im Abstand von 5 ms ablaufen. Noch kürzere Zeiten dieser Dauern werden in der Regel nicht gefordert, sind aber trotz unveränderter Anzahl von Sätzen 00...30 möglich, falls man die Frequenz des Taktes T erhöht und/oder falls man weniger CASE-Verzweigungen, also weniger Etappen mit jeweils entsprechend mehr Sätzen pro Etappe vorsieht.

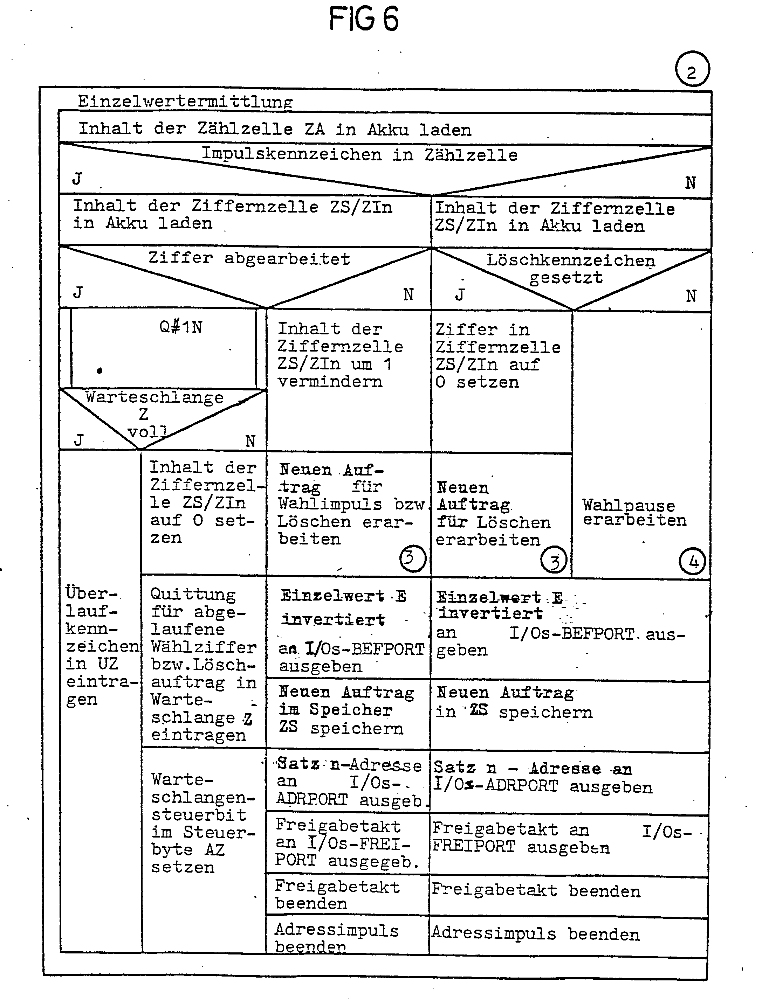

Zur Einzelwertermittlung (2), vgl. Fig. 5 und 6, liest man zunächst nochmals direkt den Inhalt der Ziffernzelle ZS/ZIn - der sich inzwischen, z.B. durch Beenden der Aufträge aufgrund des Einhängens des wählenden Teilnehmers eines Fernsprech-Vermittlungssystems - geändert haben könnte und ermittelt aus dem in der Zählzelle ZA gespeicherten Kennzeichen, ob ein Wählimpuls oder eine Wählpause zu liefern ist. Falls ein Wählimpuls zu liefern ist, vgl. "J" in Fig. 6, wird als nächster Schritt für den zu bearbeitenden Satz n aus dem Inhalt der Ziffernzelle ZS/ZIn, der im Speicher ZS zwischengespeichert ist, abgeleitet, ob der betreffende Auftrag bereits abgearbeitet ist oder gelöscht wurde. Ist dies der Fall, vgl. "J", wird durch den Start eines besonderen, Q #.1 N genannten, darunter angegebenen
Ablaufes die Adresse des nächsten freien Elementes in
der FIFO-Warteschlage Z bestimmt, vgl. "Warteschlange
Z voll?" in Fig. 6. Bei erfolgreicher Adressierung,
vgl. "N", wird der Inhalt der Ziffernzelle ZS/ZIn auf
"Null"gesetzt und der letzten Endes an I/Oc gerichtete
Sonderauftrag "Erledigt-Meldung senden" und evtl. ein
Auftrag zum Löschen des im Speicher ZS gespeicherten
Auftrages in das adressierte Warteschlangenelement
übertragen. Nach dem Eintrag in die Warteschlange Z
wird ein Warteschlangen-Steuerbit gesetzt, und zwar im
Speicher AZ, der ein Warteschlangensteuerbyte daraus
bildet, das zur Ermittlung der Adresse des nächsten
freien Elementes der Warteschlange Z dient.

Bei voller Warteschlange Z, vgl. "J" bei der Prüfung
"Warteschlange Z voll" in Fig. 6, wird ein Überlaufkennzeichen in den Speicher UZ eingetragen, wodurch
z.B. zunächst eine Leerung der Warteschlange Z durch
Sendungen an CC über I/Oc veranlaßt werden kann, bevor
mit der Prüfung "Warteschlange Z voll?" erneut ein Versuch zum Einschreiben des Sonderauftrages in die Warteschlange Z gestartet wird.

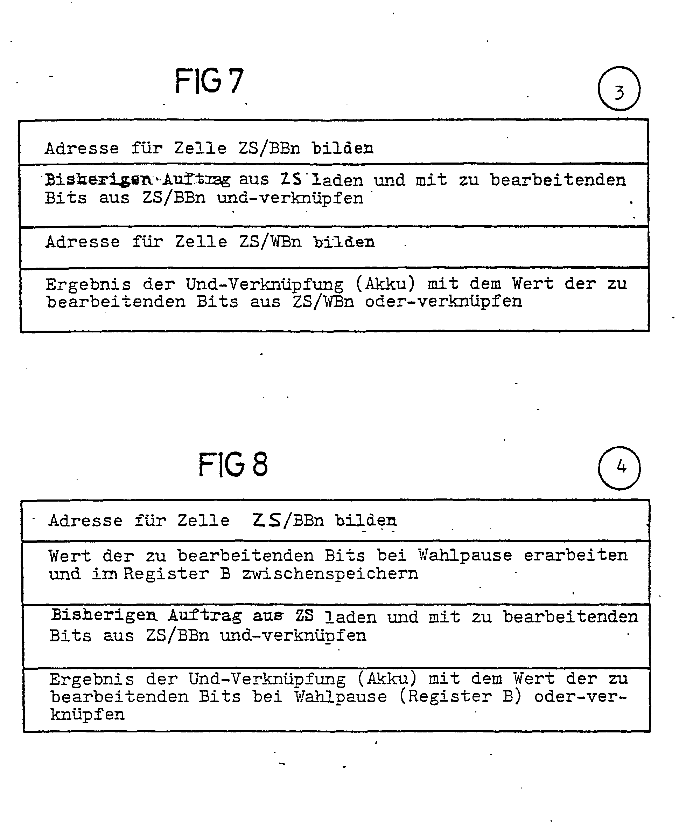

Ist für den zu bearbeitenden Satz n die auszusendende
Ziffer noch nicht abgearbeitet, vgl. "N" bei der Prüfung
"Ziffer abgearbeitet" in Fig. 6, und ist also noch ein
Wählimpuls zu liefern, dann wird der Inhalt der Ziffernzelle ZS/ZIn zunächst um eine Einheit vermindert. Aus
der codierten Adresse des Satzes n im Speicher AC, ferner aus den zu bearbeitenden Bits aus ZS/ZIn, d.h. aus
ZS/BBn, sowie aus dessen Wert ZS/WBn (vgl. die Beispiele in Fig. 7 und 8), d.h. aus der Anzahl noch zu sendender Wählimpulse, wird der neue im Zwischenspeicher
ZS zu speichernde Auftrag gebildet und überdies mit der

wahren Adresse des Satzes n invertiert über das Befehlsport des Senders I/Os gesendet. Anschließend wird
der neue Auftrag im Speicher ZS gespeichert und die bereitgestellte wahre Adresse des Satzes n über das Adreßport des Senders I/Os gesendet. Durch die relativ späte
Ausgabe des Freigabetaktes über den Sender I/Os wird
sichergestellt, daß die geforderten Einschwingzeiten
für das Befehlsport und für das Adreßport eingehalten
werden.

Wenn in der Zählzelle ZA kein Impulskennzeichen eingetragen ist, vgl. "N" bei der Prüfung "Impulskennzeichen
in Zählzelle ?" in Fig. 6, wird für den zu bearbeitenden Satz n aus der Zelle ZS/ZIn des Speichers ZS abgefragt, ob ein Löschkennzeichen gesetzt ist. Bei eingetragenem Löschkennzeichen, vgl. "J", wird der Wert der
Ziffer in ZS/ZIn auf "Null" gesetzt. Anschließend wird
das Löschen der Ziffer z.B. durch den in Fig. 7 gezeigten Ablauf, vorbereitet, wie oben bereits für einen auszusendenden Wählimpuls beschrieben wurde.

Ist für den zu bearbeitenden Satz n aber kein Löschkennzeichen gesetzt, vgl. "N", und in der Zählzelle ZA kein
Impulskennzeichen eingetragen, dann ist für den Satz n
eine Wählpause zu erarbeiten, z.B. nach dem in Fig. 8
gezeigten Schema. Hierfür wird aus den zu bearbeitenden
Bits in ZS/BBn sowie aus deren Wert ZS/WBn der Wert der
zu bearbeitenden Bits bei Wählpause gebildet und in einem
Register der Prozessoreinheit SGP zwischengespeichert.
Aus der codierten Adresse des Satzes n im Speicher AC,
ferner aus den zu bearbeitenden Bits aus ZS/ZIn, d.h.
aus ZS/BBn, sowie aus deren Wert ZS/WBn wird der neue im
Zwischenspeicher ZS zu speichernde Auftrag für die Wählpause gebildet. Das Senden und Abspeichern dieses neuen
Auftrages bei Wählpause entspricht dem Ablauf, wie er
für das Senden eines Wählimpulses beschrieben wurde.

Nach Beendigung der jeweiligen Variante des in Fig. 6 gezeigten Ablaufschemas wird der in Fig. 4 gezeigte restliche Ablauf fortgesetzt, bis die jeweils betreffende Etappe beendet ist.

Bei einer Ausführung dieses speziellen Beispiels war der für die Wählimpulslieferung-Steuerung benötigte gesamte Speicherkapazitätsbedarf 804 Bytes à acht Bits. Der Zeitbedarf war, bei einer internen Bearbeitungsgeschwindigkeit des Steuerorgans von 2 MHz, für die Pflege der Zählzelle ZA - vgl. Fig. 4, Beginn bis "Zählerstand in Zählzelle ZA speichern" - 158 $\mu$s, für den in Fig. 5 gezeigten Ablaufausschnitt ohne Ablauf ② 25 $\mu$s, für den in Fig. 6 gezeigten Ablauf ② ca. 115 $\mu$s mit Ausnahme des dortigen Ablaufes Q $\neq$ 1 N, der 234 $\mu$s benötigte solange die Warteschlange Z nicht voll war. So kurze Bearbeitungsdauern waren insbesondere deswegen möglich, weil alle in Fig. 2 gezeigten Speicher bzw. Speicherbereiche dezentral individuell direkt bei der Prozessoreinheit SGP angebracht waren, statt, wenigstens teilweise, zentral z.B. beim Rechner CC angebracht zu werden. Dadurch werden die Laufzeiten der Datensignale zum zentral angebrachten Speicher und Wartezeiten in dort zusätzlich angebrachten Warteschlangen zur Pufferung der Lesevorgänge vermieden.

7 Patentansprüche
8 Figuren

Patentansprüche.

1. Verfahren zur individuellen Steuerung der, Verbindungskenndaten empfangenden und liefernden, Sätze einer Satzgruppe eines mehrere Satzgruppen aufweisenden Fernmeldesystems, insbesondere eines Fernsprech-Vermittlungssystems, mittels eines Steuerorgans, das

- eine Prozessoreinheit aufweist, sowie einen Sender, der zur Steuerung der Sätze impulsförmig die Adressen der zugeordneten Sätze sowie Sendeimpulse, nämlich die impulsförmigen Informationen für diese Sätze, sendet, und

- Zugriff zu mehreren Speichern hat, die auch durch mehrere Abschnitte eines oder mehrerer Mehrzweckspeicher gebildet sein können,

d a d u r c h   g e k e n n z e i c h n e t , daß das Steuerorgan (SGS), zur Bearbeitung einer zusätzlichen Aufgabe "Steuerung der Wählimpulslieferung", in Zeiten zwischen der Bearbeitung seiner sonstigen Aufträge,

- einen Auftragsspeicher (ASP) - bzw. einen entsprechenden Abschnitt des Mehrzweckspeichers (M) - abfragt, der zur Speicherung der Aufträge dient, welche der verschiedenen zugeordneten Sätze (00...30) derzeit eine Wählimpulsfolge - zur Lieferung dieser Wählimpulse an die an den betreffenden Satz (z.B. 00) jeweils angeschlossenen Wählimpulsempfänger, z.B. eines weit entfernten Vermittlungsamtes - zu liefern haben,

- einen Zwischenspeicher (ZS) - bzw. einen entsprechenden Abschnitt des Mehrzweckspeichers (M) - abfragt, der zur Speicherung der, im Rahmen der Bearbeitung der im Auftragsspeicher (ASP) gespeicherten Aufträge, jeweiligen Anzahl der derzeit noch zu liefernden Wählimpulse hinsichtlich der durch das Abfragen ermittelten Aufträge dient,

- anschließend aus den abgefragten Inhalten des Auftragsspeichers (ASP) und des Zwischenspeichers (ZS) Einzelwerte (E) ermittelt, die auf einzelne Punkte von Wählimpulsen der zu liefernden, aus Wählimpulsen mit bestimmten Impulsdauern (60 ms) und Pausendauern (40 ms)
gebildeten Wählimpulsfolgen bezogen sind, und

- über den Sender (I/Os), gesteuert von einem zentral
gesteuerten Takt (T), die Einzelwerte (E) - abhängig
von dem Vorhandensein eines Auftrags im Auftragsspeicher (ASP), von dem Inhalt des Zwischenspeichers (ZS)
und von der Anzahl der Taktimpulse (T) seit Beginn des
letzten, von dem betreffenden Satz gelieferten Wählimpulses bzw. seit dem letzten, einem Impulsbeginn entsprechenden Einzelwert (E) - an die jeweils betroffenen Sätze (z.B. 00) seiner Satzgruppe (00...30) sendet.

2. Verfahren nach Patentanspruch 1,
d a d u r c h   g e k e n n z e i c h n e t , daß
- die Einzelwerte (E) der Wählimpulsfolgen jeweils nur
einen einzigen, dem Impulsdauerbeginn entsprechenden
ersten Sendeimpuls (LOW) und danach einen einzigen, dem
Pausendauerbeginn entsprechenden zweiten Sendeimpuls
(HIGH) darstellen.

3. Verfahren nach Patentanspruch 2,
d a d u r c h   g e k e n n z e i c h n e t , daß
- je eine durch den Takt (T) gesteuerte Zählkette variabler Länge, zur beliebigen nachträglichen Änderung der
Impulsdauer (60 ms) und der Pausendauer (40 ms), angebracht ist,
- die der Impulsdauer (60 ms) entsprechende Zählkette an
ihrem Ausgang den dem Pausendauerbeginn entsprechenden
zweiten Sendeimpuls (HIGH) bereitstellt und
- die der Pausendauer (40 ms) entsprechende Zählkette an
ihrem Ausgang den dem Impulsdauerbeginn entsprechenden
ersten Sendeimpuls (LOW) bereitstellt.

0029547

4. Verfahren nach einem der Patentansprüche 1 bis 3, dadurch gekennzeichnet, daß

- der Auftragsspeicher (ASP) die Funktion des Zwischenspeichers (ZS) mit übernimmt, indem die Prozessoreinheit (SGP) laufend in den Auftragsspeicher (ASP) die jeweilige Anzahl der derzeit noch zu liefernden Wählimpulse über die dort ursprünglich zusätzlich gespeicherte Information, welche Anzahl von Wählimpulsen für die betreffende Wählimpulsfolge ursprünglich insgesamt zu liefern sind, überschreibt.

5. Verfahren nach einem der Patentansprüche 1 bis 4, dadurch gekennzeichnet, daß - die Informationen über Wählimpulslieferungs-Steueraufträge in dem Auftragsspeicher (ASP) und/oder in dem Zwischenspeicher (ZS) jeweils in ständig gleichen Bereichen, die für sich jeweils fest den einzelnen Sätzen (00...30) zugeordnet sind, eingeschrieben werden.

6. Verfahren nach einem der Patentansprüche 1 bis 5, dadurch gekennzeichnet, daß - in den Auftragsspeicher (ASP), für mindestens einen Satz (z.B. 00) seiner Satzgruppe (00...30), auch die Anzahl der Wählimpulse späterer Wählimpulsfolgen, die erst später, nach Abschluß von dem derzeit für denselben Satz (00) bearbeiteten Wählimpulslieferungs-Steuerauftrag, zu liefern sind, eingeschrieben werden.

7. Verfahren nach einem der Patentansprüche 1 bis 6, dadurch gekennzeichnet, daß das Steuerorgan (SGS)

- in einem länger dauernden Zeitabschnitt - nämlich zwischen dem kurz dauernden Liefern von Einzelwerten (E) für einen ersten Teil der zugeordneten Sätze

(OO, 07, 14, 21, 28) und dem späteren ähnlich kurz
dauernden Liefern von Einzelwerten (E) für einen anderen, zweiten Teil der zugeordneten Sätze (01, 08,
15, 22, 29) - routinemäßig andere, nicht auf Lieferung
solcher Einzelwerte (E) gerichtete Aufträge, sondern
z.B. auf Ausgabe sonstiger Aufträge oder Informationen
(über I/Os) an die Sätze (OO...30) gerichtete Aufträge
oder(über I/Oz) an zentrale Vermittlungssystemorgane
(CC) gerichtete Aufträge, bearbeitet.

FIG1

1/7

| | SGS | |
|---|---|---|
| 00 | | |
| 01 | | |
| 02 | | |
| ⋮ | | |
| 29 | | |
| 30 | | |

| | SGS | |
|---|---|---|
| 00 | | |
| 01 | | |
| 02 | | |
| ⋮ | | |
| 29 | | |
| 30 | | |

| | SGS | |
|---|---|---|
| 00 | | |
| 01 | | |
| 02 | | |
| ⋮ | | |
| 29 | | |
| 30 | | |

SN

CC

FIG 2

# FIG 3

5ms

T

Impuls (60ms)

E E E
Low

E E E                                    HIGH
Pause (40ms)

| 00 | 01 | 02 | 03 | 04 | 05 | 06 |
|----|----|----|----|----|----|----|
| 07 | 08 | 09 | 10 | 11 | 12 | 13 |
| 14 | 15 | 16 | 17 | 18 | 19 | 20 |
| 21 | 22 | 23 | 24 | 25 | 26 | 27 |
| 28 | 29 | 30 |    |    |    |    |

Satz

| 00 | 01 | 02 | 03 | 04 | 05 | 06 |
|----|----|----|----|----|----|----|
| 07 | 08 | 09 | 10 | 11 | 12 | 13 |
| 14 | 15 | 16 | 17 | 18 | 19 | 20 |
| 21 | 22 | 23 | 24 | 25 | 26 | 27 |
| 28 | 29 | 30 |    |    |    |    |

# FIG 4

| Inhalt der Zählzelle in Akku laden | | | | | | |
|---|---|---|---|---|---|---|

Inhalt Zählzelle = vorgegebene Impulsdauer

J        N

| Pausenkennzeichen und Zählerstand 0 in Akku laden | Inhalt Zählzelle = vorgegene Pausendauer J N |
|---|---|

| | Impulskennzeichen und Zählerstand 0 in Akku laden | Zählerstand um 1 erhöhen |
|---|---|---|

Zählerstand (mit Kennzeichen) in Zählzelle ZA speichern

CASE$_{INDEX}$ = Zählzelle

| 0 | 1 | 2 | 3 | 4 | 5 | 6 |
|---|---|---|---|---|---|---|
| Satz 00 bearbeiten ① | Satz 01 bearbeiten ① | Satz 02 bearbeiten ① | Satz 03 bearbeiten ① | Satz 04 bearbeiten ① | Satz 05 bearbeiten ① | Satz 06 bearbeiten ① |
| Satz 07 bearbeiten ① | Satz 08 bearbeiten ① | Satz 09 bearbeiten ① | Satz 10 bearbeiten ① | Satz 11 bearbeiten ① | Satz 12 bearbeiten ① | Satz 13 bearb. ① |
| Satz 14 bearbeiten ① | Satz 15 bearbeiten ① | Satz 16 bearbeiten ① | Satz 17 bearbeiten ① | Satz 18 bearbeiten ① | Satz 19 bearbeiten ① | Satz 20 bearb. ① |
| Satz 21 bearbeiten ① | Satz 22 bearbeiten ① | Satz 23 bearbeiten ① | Satz 24 bearbeiten ① | Satz 25 bearbeiten ① | Satz 26 bearbeiten ① | Satz 27 bearbeit. ① |
| Satz 28 bearbeiten ① | Satz 29 bearbeiten ① | Satz 30 bearbeiten ① | | | | |

0029547

# FIG 5

① 

Für Satz n (n = 00 ... 30) Inhalt der Ziffernzelle
ZS/ZIn in Akku laden

Inhalt der Ziffernzelle ≠ 0

J

N

Daten für Satz n für Ermittlung von zu
sendenden Wählimpulsen-Einzelwerten bereitstellen

Fortsetzung:
siehe Fig.4

② 

Einzelwertermittlung

②

| Einzelwertermittlung | | | | |
|---|---|---|---|---|
| Inhalt der Zählzelle ZA in Akku laden | | | | |
| Impulskennzeichen in Zählzelle | | | | |
| J | | | | N |
| Inhalt der Ziffernzelle ZS/ZIn in Akku laden | | Inhalt der Ziffernzelle ZS/ZIn in Akku laden | | |
| Ziffer abgearbeitet | | Löschkennzeichen gesetzt | | |
| J | N | J | | N |
| Q#1N | Inhalt der Ziffernzelle ZS/ZIn um 1 vermindern | Ziffer in Ziffernzelle ZS/ZIn auf 0 setzen | | |
| Warteschlange Z voll | | | | |
| J | N | | | |
| | Inhalt der Ziffernzelle ZS/ZIn auf 0 setzen | Neuen Auftrag für Wahlimpuls bzw. Löschen erarbeiten ③ | Neuen Auftrag für Löschen erarbeiten ③ | Wahlpause erarbeiten ④ |
| Überlaufkennzeichen in UZ eintragen | Quittung für abgelaufene Wählziffer bzw. Löschauftrag in Warteschlange Z eintragen | Einzelwert E invertiert an I/Os-BEFPORT ausgeben | Einzelwert E invertiert an I/Os-BEFPORT ausgeben | |
| | | Neuen Auftrag im Speicher ZS speichern | Neuen Auftrag in ZS speichern | |
| | Warteschlangensteuerbit im Steuerbyte AZ setzen | Satz n-Adresse an I/Os-ADRPORT ausgeb. | Satz n - Adresse an I/Os-ADRPORT ausgeben | |
| | | Freigabetakt an I/Os-FREIPORT ausgegeb. | Freigabetakt an I/Os-FREIPORT ausgeben | |
| | | Freigabetakt beenden | Freigabetakt beenden | |
| | | Adressimpuls beenden | Adressimpuls beenden | |

## FIG 7 ③

| |
|---|
| Adresse für Zelle ZS/BBn bilden |
| Bisherigen Auftrag aus ZS laden und mit zu bearbeitenden Bits aus ZS/BBn und-verknüpfen |
| Adresse für Zelle ZS/WBn bilden |
| Ergebnis der Und-Verknüpfung (Akku) mit dem Wert der zu bearbeitenden Bits aus ZS/WBn oder-verknüpfen |

## FIG 8 ④

| |
|---|
| Adresse für Zelle ZS/BBn bilden |
| Wert der zu bearbeitenden Bits bei Wahlpause erarbeiten und im Register B zwischenspeichern |
| Bisherigen Auftrag aus ZS laden und mit zu bearbeitenden Bits aus ZS/BBn und-verknüpfen |
| Ergebnis der Und-Verknüpfung (Akku) mit dem Wert der zu bearbeitenden Bits bei Wahlpause (Register B) oder-ver-knüpfen |

0029547

Nummer der Anmeldung
EP 80 10 6956

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | INTERNATIONAL SWITCHING SYMPOSIUM, 7-11 Mai 1979, Paris, FR, G. HAUGK et al.: "New interfaces for local electronic switching systems", Seiten 721-728<br><br>* Seite 726, rechte Spalte, Zeile 1 bis Seite 727, rechte Spalte, Zeile 9 *<br><br>-- | 1,7 |
| | CONFERENCE RECORD, 1978 NATIONAL TELECOMMUNICATIONS CONFERENCE, Band 3, 3-6. Dezember 1978, Birmingham, Alabama ,US, AYI NASH K. SHRIVASTAVA et al.: "Autonomous decadic outpulsing for SPC switching systems", Seiten 47.5.1 bis 47.5.5<br><br>* Seite 47.5.2, linke Spalte, Zeile 7 bis Seite 47.5.4, rechte Spalte, Zeile 49 *<br><br>-- | 1,3,4, 6 |
| | IEEE TRANSACTIONS ON COMMUNICATIONS, Band COM-27, Nr. 3, März 1979, New York, US, S. GOVIND et al.: "Design and implementation of a signalling handling unit for electronic exchanges", Seiten 591-596<br><br>* Seite 591, rechte Spalte, Zeile 1 bis Seite 592, linke Spalte, Zeile 53; Seite 594, rechte Spalte, Zeile 9 bis Seite 595, linke Spalte, Zeile 13 *<br><br>-- ./. | 1,2,7 |

**KLASSIFIKATION DER ANMELDUNG (Int. Cl.³)**

H 04 Q 3/54

**RECHERCHIERTE SACHGEBIETE (Int. Cl.³)**

H 04 Q

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-02-1981 | VERSLYPE |

EPA form 1503.1   06.78

**Europäisches Patentamt**

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | DE - A - 2 502 516 (C.I.T.)<br><br>* Seite 3, Zeilen 6-23; Seite 4, Zeile 24 bis Seite 6, Zeile 15 *<br><br>-- | 1 | |
| A | NACHRICHTENTECHNISCHE ZEITSCHRIFT, Band 29, Nr. 8, 1976, Berlin, DE, A. VON ROMAN: "EWSF die Fernwähltechnik im Elektronischen Fernsprech-Wählsystem der Deutschen Bundespost", Seiten 585-591<br><br>* Seite 589, rechte Spalte, Zeile 19 bis Seite 590, linke Spalte, Zeile 57 *<br><br>----- | 1 | RECHERCHIERTE SACHGEBIETE (Int. Cl.³) |